# EUROPEAN PATENT SPECIFICATION

(11) **EP 3 084 136 B1**
(45) Date of publication and mention of the grant of the patent: **30.12.2020**
(21) Application number: 14880082.4
(22) Date of filing: 17.11.2014
(51) Int. Cl.: F01D 5/18, F01D 5/08, F01D 11/00

(54) **ROTOR BLADE AND CORRESPONDING METHOD OF COOLING A PLATFORM OF A ROTOR BLADE**
LAUFSCHAUFEL UND ZUGEHÖRIGES VERFAHREN ZUR KÜHLUNG EINER PLATTFORM EINER LAUFSCHAUFEL
AUBE ROTORIQUE ET PROCÉDÉ ASSOCIÉ DE REFROIDISSEMENT D'UNE PLATEFORME D'UNE AUBE ROTORIQUE

(30) Priority: 17.12.2013 US 201361916856 P
(43) Date of publication of application: 26.10.2016
(73) Proprietor: United Technologies Corporation, Farmington, CT 06032 (US)
(72) Inventor: SNYDER, Daniel A., Manchester, Connecticut 06040 (US); BEATTIE, Jeffrey S., South Glastonbury, Connecticut 06073 (US)
(74) Representative: Dehns
(86) International application number: PCT/US2014/065857
(87) International publication number: WO 2015/112240

(56) References cited:
- EP-A2- 2 365 187
- EP-A2- 2 436 882
- US-A- 6 120 249
- US-A1- 2005 058 545
- US-A1- 2005 058 545
- US-A1- 2005 058 545
- US-A1- 2011 123 310
- US-A1- 2012 082 550
- US-B1- 6 196 799
- US-B1- 6 196 799
- US-B1- 6 196 799
- US-B1- 8 511 995

## Description

### BACKGROUND

This disclosure relates to rotor blades, gas turbine engines and methods of cooling a platform of rotor blades.

Gas turbine engines typically include a compressor section, a combustor section, and a turbine section. During operation, air is pressurized in the compressor section and is mixed with fuel and burned in the combustor section to generate hot combustion gases. The hot combustion gases are communicated through the turbine section, which extracts energy from the hot combustion gases to power the compressor section and other gas turbine engine loads.

Both the compressor and turbine sections of a gas turbine engine may include alternating rows of rotating blades and stationary vanes that extend into the core flow path of the engine. For example, in the turbine section, turbine blades rotate to extract energy from the hot combustion gases. The turbine vanes direct the combustion gases at a preferred angle of entry relative to the downstream row of blades. Blades and vanes are examples of components that may need cooled by a dedicated source of cooling air in order to withstand the relatively high temperatures of the hot combustion gases they are exposed to.

EP 2 365 187 A2 discloses a rotor blade and method in accordance with the preamble of claims 1 and 10.

US 2005/0058545 A1 discloses a turbine blade platform cooling system, US 8 511 995 B1 discloses a turbine blade with platform cooling, US 6 196 799 B1 discloses a gas turbine moving blade platform, and EP 2 436 882 A2 discloses a cooled rotor blade.

### SUMMARY

According to a first aspect of the present invention, there is provided a rotor blade as set forth in claim 1.

According to a further aspect of the present invention, there is provided a method as set forth in claim 10.

The embodiments, examples and alternatives of the preceding paragraphs, the claims, or the following descriptions and drawings, including any of their various aspects or respective individual features, may be taken independently or in any combination. Features described in connection with one embodiment are applicable to all embodiments, unless such features are incompatible.

The various features and advantages of this disclosure will become apparent to those skilled in the art from the following detailed description. The drawings that accompany the detailed description can be briefly described as follows.

### BRIEF DESCRIPTION OF THE DRAWINGS

Figure 1 illustrates a schematic, cross-sectional view of a gas turbine engine.
Figure 2 illustrates a rotor blade that can be utilized by a gas turbine engine.
Figure 3 illustrates a top view of the rotor blade of Figure 2.
Figure 4 illustrates a platform cooling passage of a rotor blade according to one embodiment of this disclosure.
Figure 5 illustrates a platform cooling passage of a rotor blade according to another embodiment of this disclosure.
Figure 6 illustrates a platform cooling passage of a rotor blade according to yet another embodiment of this disclosure.
Figure 7 illustrates a cross-sectional view of a rotor blade.
Figure 8 illustrates another exemplary rotor blade.
Figure 9 illustrates yet another exemplary rotor blade, which is not part of the invention.

### DETAILED DESCRIPTION

This disclosure relates to a gas turbine engine rotor blade. The rotor blade includes a platform cooling passage that can be fed with a cooling fluid supplied from either a forward rim cavity or a neck pocket. The cooling passage includes an inlet through a non-gas path surface of a platform of the blade and an outlet at a mate face of the platform. The outlet may be positioned at a trailing edge of an airfoil of the blade, aft of the airfoil trailing edge, or forward of the airfoil trailing edge. These and other features are described in detail herein.

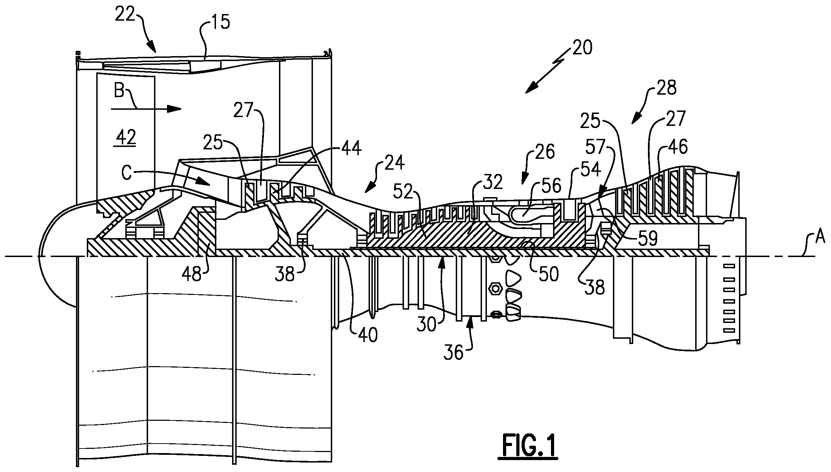

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmenter section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine engine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 m). The flight condition of 0.8 Mach and 35,000 ft (10,668 m), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5} (where °R = K x 9/5). The "Low corrected fan tip speed" as disclosed herein according to one non-limiting embodiment is less than about 1150 ft / second (350.5 m/s).

The compressor section 24 and the turbine section 28 may include alternating rows of rotor assemblies and vane assemblies (shown schematically) that carry airfoils that extend into the core flow path C. For example, the rotor assemblies can carry a plurality of rotating blades 25, while each vane assembly can carry a plurality of vanes 27 that extend into the core flow path C. The blades 25 of the rotor assemblies create or extract energy (in the form of pressure) from the core air flow that is communicated through the gas turbine engine 20 along the core flow path C. The vanes 27 of the vane assemblies direct the core airflow to the blades 25 to either add or extract energy.

Various components of the gas turbine engine 20, such as airfoils of the blades 25 and the vanes 27 of the compressor section 24 and the turbine section 28, may be subjected to repetitive thermal cycling under widely ranging temperatures and pressures. The hardware of the turbine section 28 is particularly subjected to relatively extreme operating conditions. Therefore, some components may require internal cooling circuits for cooling the parts during engine operation. This disclosure relates to rotor blades having platform cooling passages that feed a cooling fluid through an outlet positioned at a mate face of the blade for impingement cooling a mate face of a circumferentially adjacent blade, thereby reducing oxidation caused by hot gas ingestion at the mate face gap between the adjacent blades.

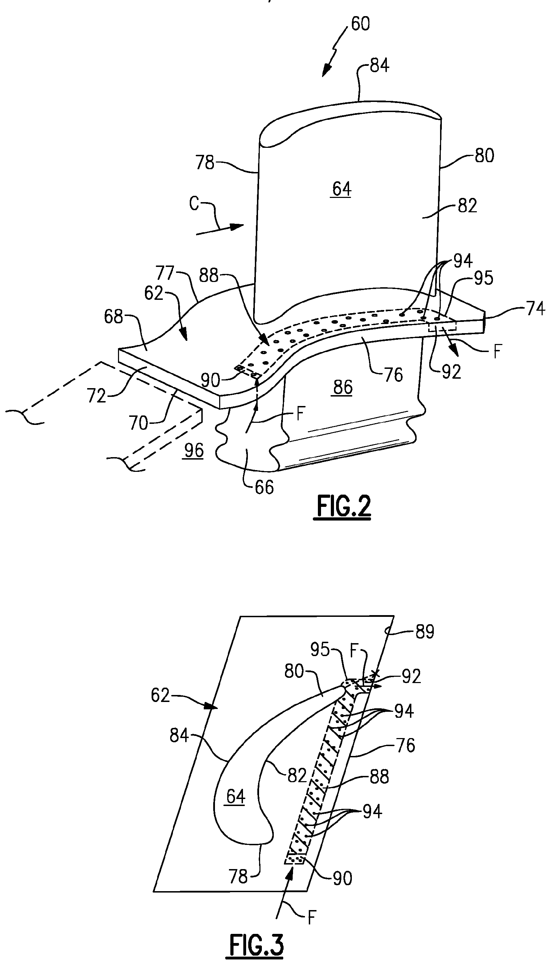

Figure 2 illustrates a rotor blade 60 that can be incorporated into a gas turbine engine, such as the compressor section 24 or the turbine section 28 of the gas turbine engine 20 of Figure 1. The rotor blade 60 may be part of a rotor assembly (not shown in Figure 2) that includes a plurality of rotor blades circumferentially disposed about the engine centerline longitudinal axis A and configured to rotate to extract energy from the core airflow of the core flow path C.

The rotor blade 60 includes a platform 62, an airfoil 64 and a root 66. In one embodiment, the airfoil 64 extends from a gas path surface 68 of the platform 62 and the root 66 extends from a non-gas path surface 70 of the platform 62. In other words, the airfoil 64 and the root 66 extend in opposite directions from the platform 62. The gas path surface 68 is exposed to the hot combustion gases of the core flow path C, whereas the non-gas path surface 70 68- is remote from the core flow path C.

The platform 62 axially extends between a leading edge 72 and a trailing edge 74 and circumferentially extends between a first mate face 76 and a second mate face 77. The airfoil 64 axially extends between a leading edge 78 and a trailing edge 80 and circumferentially extends between a pressure side 82 and a suction side 84.

The root 66 is configured to attach the rotor blade 60 to a rotor assembly, such as within a slot formed in a rotor assembly. The root 66 includes a neck 86, which is, in one embodiment, an outer wall of the root 66.

The rotor blade 60 may include a platform cooling passage 88 that extends inside the platform 62 of the blade 60. For example, the platform cooling passage 88 could be a hollow portion of the platform 62. It should be understood that the rotor blade 60 could include additional cooling passages, cooling holes etc. as part of an overall cooling circuit for cooling the rotor blade 60.

In one embodiment, a cooling fluid F may be circulated through the platform cooling passage 88 for cooling the surfaces of the platform 62. Additional details of exemplary platform cooling passages are described in detail below with respect to Figures 3, 4, 5 and 6.

Figure 3 (with continued reference to Figure 2) illustrates a first embodiment of a platform cooling passage 88. In one embodiment, the platform cooling passage 88 is formed inside the platform 62 of the blade 60 in a casting process by using ceramic materials. In another embodiment, the platform cooling passage 88 is formed in a casting process by using refractory metal materials. In yet another embodiment, the platform cooling passage 88 can be formed using both ceramic and refractory metal materials.

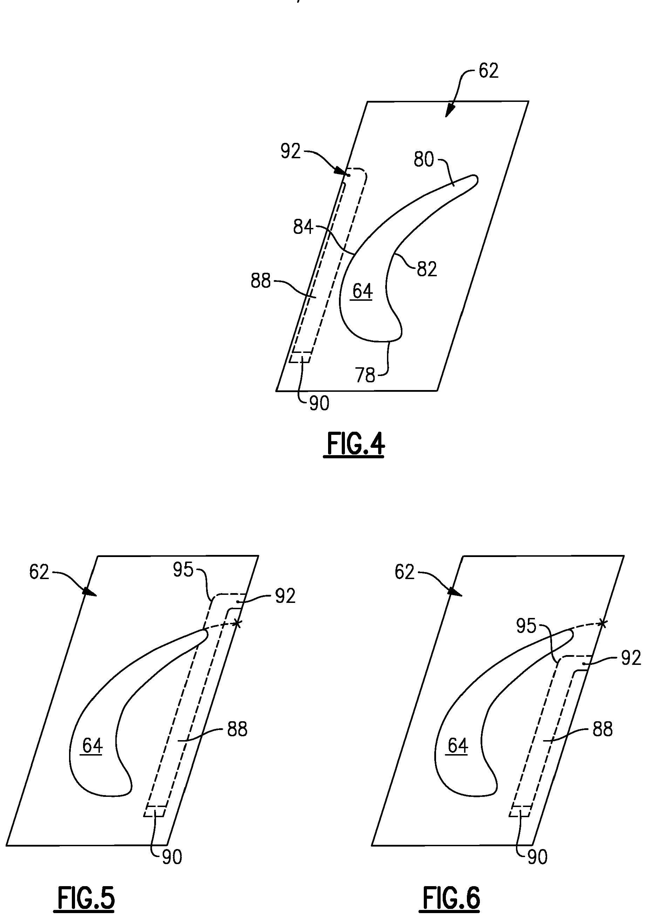

In one non-limiting embodiment, the platform cooling passage 88 is disposed on a side of the platform 62 that is adjacent to the pressure side 82 of the airfoil 64. Alternatively, in another non-limiting embodiment, the platform cooling passage 88 may be disposed on a side of the platform 62 that is adjacent to the suction side 84 of the airfoil 64 (see Figure 4).

The platform cooling passage 88 extends between an inlet 90 and an outlet 92. The inlet 90 is an opening formed through the non-gas path surface 70 of the platform 62 and is located upstream from the leading edge 78 of the airfoil 64. The cooling fluid F is directed inside of the platform cooling passage 88 through the inlet 90.

In this embodiment, the outlet 92 is an opening disposed through the mate face 76 of the platform 62. The outlet 92 may be positioned at the trailing edge 80 of the airfoil 64. Stated another way, should the trailing edge 80 of the airfoil 64 be extended to an edge 89 of the platform 62, it would be at a position X. At the trailing edge 80 therefore means that the outlet 92 is through the mate face 76 at the same axial position as the position X. The position X could be defined as the dividing line between the pressure side 82 and the suction side 84 of the airfoil 64.

In another embodiment, the outlet 92 is positioned downstream of the trailing edge 80, or downstream from the position X (see Figure 5). In an additional non-limiting embodiment, the outlet 92 of the platform cooling passage 88 is positioned upstream from the trailing edge 80, or upstream from the position X (see Figure 6).

The platform cooling passage 88 may extend along a substantially liner path between the inlet 90 and the outlet 92. The platform cooling passage 88 could additionally include one or more curved sections 95. In one embodiment, the curved section 95 leads into the outlet 92 of the platform cooling passage 88.

One or more augmentation features 94 may be formed inside the platform cooling passage 88. The augmentation features 94 may alter a flow characteristic of the cooling fluid F that is circulated through the platform cooling passage 88 to cool the platform 62. Although shown schematically in Figures 2 and 3, the augmentation features 94 may include pin fins, trip strips, pedestals, guide vanes or any other feature that can be formed within the platform cooling passage 88 to manage stress, gas flow and heat transfer.

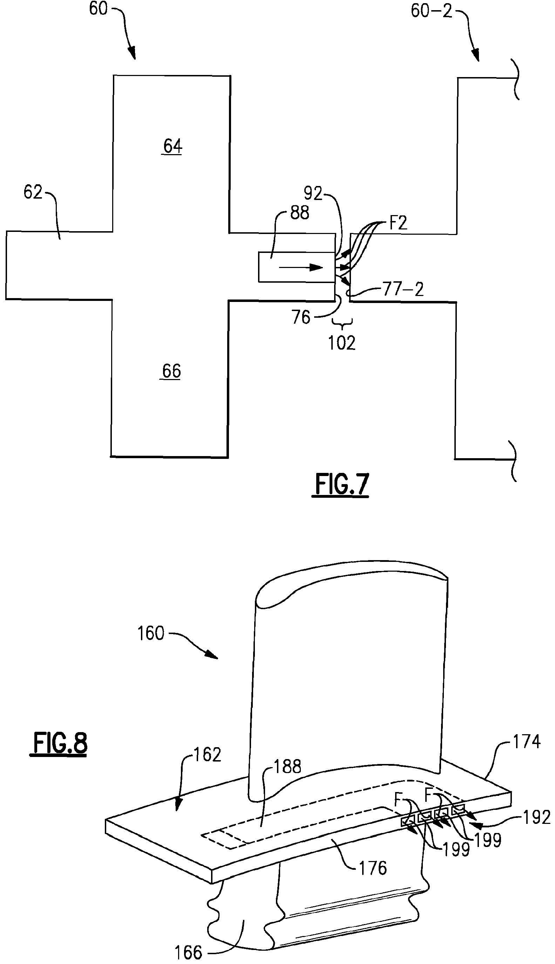

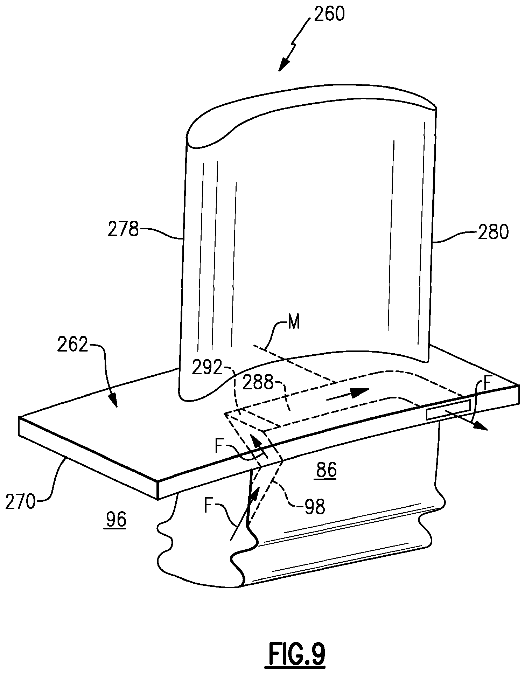

Referring to Figures 2 and 7, the cooling fluid F that feeds the platform cooling passage 88 may be extracted from a rim cavity such as a forward rim cavity 96. The forward rim cavity 96 is a pocket that extends radially inwardly from the platform 62 and is generally bound in the circumferential direction by the roots 66 of adjacent blades. Alternatively, in another embodiment, the inlet 90 of the platform cooling passage 88 is fed via a neck pocket 98 formed in the neck 86 of the root 66, as discussed in greater detail with respect to Figure 9.

Once inside the platform cooling passage 88, the cooling fluid F may circulate over, around or through the augmentation features 94 prior to being expelled through the outlet 92. In one non-limiting embodiment, the cooling fluid F is expelled through the outlet 92 to provide a layer of film cooling air F2 at the mate face 76 (see Figure 7). For example, the layer of film cooling air F2 expelled from the outlet 92 discourages hot combustion gases from the core flow path C from ingesting into the mate face gap 102 that extends between the mate face 76 of the blade 60 and a mate face 77-2 of a circumferentially adjacent blade 60-2.

Figure 8 illustrates another exemplary platform cooling passage 188 that can be provided within a rotor blade 160. In this disclosure, like reference numerals represent like features, whereas reference numerals modified by 100 are indicative of slightly modified features.

In this embodiment, an outlet 192 of the platform cooling passage 188 includes a plurality of outlet openings 199. The outlet openings 199 are formed through a mate face 176 of the platform 162 and are axially spaced from one another. The outlet openings 199 are generally disposed near a trailing edge 174 of the platform 162. A cooling fluid F may exit the platform cooling passage 188 through each outlet opening 199 to provide multiple layers of film cooling at the mate face 176.

Figure 9 illustrates an embodiment that is not part of the present invention of a platform cooling passage 288 for a rotor blade 260. This embodiment is similar to the Figure 3 and Figure 7 embodiments except that the platform cooling passage 288 is fed via a neck pocket 98 rather than the forward rim cavity 96. The neck pocket 98 establishes a passage between the forward rim cavity 96 and an inlet 292 of the platform cooling passage 288 that is disposed through a non-gas path surface 270 of the platform 262.

Although the different non-limiting embodiments are illustrated as having specific components, the embodiments of this disclosure are not limited to those particular combinations. It is possible to use some of the components or features from any of the non-limiting embodiments in combination with features or components from any of the other non-limiting embodiments.

It should be understood that like reference numerals identify corresponding or similar elements throughout the several drawings. It should also be understood that although a particular component arrangement is disclosed and illustrated in these exemplary embodiments, other arrangements could also benefit from the teachings of this disclosure.

The foregoing description shall be interpreted as illustrative and not in any limiting sense. A worker of ordinary skill in the art would understand that certain modifications could come within the scope of this disclosure. For these reasons, the following claims should be studied to determine the true scope and content of this disclosure.

## Claims

1. A rotor blade (60;160) comprising:
a platform (62;162) that extends between a leading edge (72) and a trailing edge (74;174) and circumferentially extends between a first mate face (76;176) and a second mate face (77);
an airfoil (64) that extends from a gas path surface (68) of said platform (62;162);
a root (66;166) extending from a non-gas path surface (70) of said platform (62;162), whereby said airfoil (64) and said root (66;166) extend in opposite directions from said platform (62;162); and
a platform cooling passage (88;188) extending inside of said platform (62;162); and said platform cooling passage (88;188) including an inlet (90) disposed upstream from a leading edge (78) of said airfoil (64) and an outlet (92; 192) disposed through a mate face (76;176;77) of said platform (62;162),
**characterised in that**:
said inlet (90) is disposed through said non-gas path surface (70) of said platform (62;162).

2. The rotor blade as recited in claim 1, wherein said platform cooling passage (88;188) includes a curved section (95) that leads into said outlet (92;192).

3. The rotor blade as recited in claim 1 or 2, wherein said inlet (90) is fed with a cooling fluid from a forward rim cavity (96).

4. The rotor blade as recited in claim 3,
wherein said forward rim cavity (96) is radially inward from said platform (62;162) and is upstream from said root (66;166).

5. The rotor blade as recited in any preceding claim, comprising at least one augmentation feature (94) formed inside said platform cooling passage (88;188).

6. The rotor blade as recited in any preceding claim, wherein said outlet (92;192) is positioned at a trailing edge (80) of said airfoil (64) upstream from said trailing edge (80) of said airfoil (64), or downstream from said trailing edge (80) of said airfoil (64).

7. The rotor blade as recited in any preceding claim, wherein said platform cooling passage (88;188) is positioned adjacent to a pressure side (82) of said airfoil (64), or is positioned adjacent to a suction side (84) of said airfoil (64).

8. The rotor blade as recited in any preceding claim, wherein said outlet (192) includes a plurality of outlet openings (199) formed through said mate face (176).

9. A gas turbine engine (20), comprising:
a rotor blade (60;160) as recited in any preceding claim.

10. A method of cooling a platform (62;162) of a rotor blade (60;160), comprising the steps of:
providing a rotor blade (60;160) comprising a platform (62;162) that extends between a leading edge (72) and a trailing edge (74;174) and circumferentially extends between a first mate face (76;176) and a second mate face (77);
an airfoil (64) that extends from a gas path surface (68) of said platform (62;162);
a root (66;166) extending from a non-gas path surface (70) of said platform (62;162), whereby said airfoil (64) and said root (66;166) extend in opposite directions from said platform (62;162); and
a platform cooling passage (88;188) extending inside of said platform (62;162);
communicating a cooling fluid into an inlet (90) of said platform cooling passage (88,188), the inlet (90) disposed upstream from a leading edge (78) of said airfoil (64);
circulating said cooling fluid through said platform cooling passage (88;188) to remove heat from said platform (62;162); and
expelling said cooling fluid through an outlet (92; 192) of said platform cooling passage (88;288), the outlet disposed through a mate face (76;176;77) of said platform (62;162),
**characterised in that**:
said inlet (90) is disposed through said non-gas path surface (70) of said platform (62;162).

11. The method as recited in claim 10, wherein said step of communicating includes feeding said cooling fluid to said platform cooling passage (88;188) from a forward rim cavity (96) located radially inward of said platform (62;162).

12. The method as recited in claim 10 or 11, comprising depositing a film cooling layer at said mate face (76;176;77) to discourage gas ingestion into a mate face gap between adjacent rotor blades (60;160).

13. The method as recited in any of claims 10 to 12, wherein said step of circulating includes communicating said cooling fluid through a curved section (95) of said platform cooling passage (88;188) prior to said step of expelling.

## Patentansprüche

1. Rotorschaufel (60; 160), umfassend:
eine Plattform (62; 162), die sich zwischen einer Vorderkante (72) und einer Hinterkante (74; 174) erstreckt und sich in Umfangsrichtung zwischen einer ersten Passfläche (76; 176) und einer zweiten Passfläche (77) erstreckt;
ein Schaufelprofil (64), das sich von einer Gaswegfläche (68) der Plattform (62; 162) aus erstreckt;
einen Fuß (66; 166), der sich von einer Nicht-Gaswegfläche (70) der Plattform (62; 162) aus erstreckt, wobei sich das Schaufelprofil (64) und der Fuß (66; 166) in entgegengesetzte Richtungen von der Plattform (62; 162) aus erstrecken; und
einen Plattformkühlkanal (88; 188), der sich innerhalb der Plattform (62; 162) erstreckt; und
wobei der Plattformkühlkanal (88-188) einen Einlass (90), der stromaufwärts einer Vorderkante (78) des Schaufelprofils (64) angeordnet ist, und einen Auslass (92; 192), der durch eine Passfläche (76; 176; 77) der Plattform (62; 162) angeordnet ist, beinhaltet,
**dadurch gekennzeichnet, dass**:
der Einlass (90) durch die Nicht-Gaswegfläche (70) der Plattform (62; 162) angeordnet ist.

2. Rotorschaufel nach Anspruch 1, wobei der Plattformkühlkanal (88; 188) einen gekrümmten Abschnitt (95) beinhaltet, der in den Auslass (92; 192) führt.

3. Rotorschaufel nach Anspruch 1 oder 2, wobei der Einlass (90) mit einem Kühlfluid aus einem vorderen Kranzhohlraum (96) gespeist wird.

4. Rotorschaufel nach Anspruch 3, wobei sich der vordere Kranzhohlraum (96) radial einwärts der Plattform (62; 162) befindet und stromaufwärts des Fußes (66; 166) befindet.

5. Rotorschaufel nach einem der vorstehenden Ansprüche, umfassend mindestens ein Verstärkungsmerkmal (94), das innerhalb des Plattformkühlkanals (88; 188) ausgebildet ist.

6. Rotorschaufel nach einem der vorstehenden Ansprüche, wobei der Auslass (92; 192) an einer Hinterkante (80) des Schaufelprofils (64) stromaufwärts der Hinterkante (80) des Schaufelprofils (64) oder stromabwärts der Hinterkante (80) des Schaufelprofils (64) angeordnet ist.

7. Rotorschaufel nach einem der vorstehenden Ansprüche, wobei der Plattformkühlkanal (88; 188) angrenzend an eine Druckseite (82) des Schaufelprofils (64) angeordnet ist oder angrenzend an eine Saugseite (84) des Schaufelprofils (64) angeordnet ist.

8. Rotorschaufel nach einem der vorstehenden Ansprüche, wobei der Auslass (192) eine Vielzahl von Auslassöffnungen (199) beinhaltet, die durch die Passfläche (176) ausgebildet sind.

9. Gasturbinentriebwerk (20), umfassend:
eine Rotorschaufel (60; 160) nach einem der vorstehenden Ansprüche.

10. Verfahren zum Kühlen einer Plattform (62; 162) einer Rotorschaufel (60; 160), die folgenden Schritte umfassend:
Bereitstellen einer Rotorschaufel (60; 160), die eine Plattform (62; 162) umfasst, die sich zwischen einer Vorderkante (72) und einer Hinterkante (74; 174) erstreckt und sich in Umfangsrichtung zwischen einer ersten Passfläche (76; 176) und einer zweiten Passfläche (77) erstreckt;
ein Schaufelprofil (64), das sich von einer Gaswegfläche (68) der Plattform (62; 162) aus erstreckt;
einen Fuß (66; 166), der sich von einer Nicht-Gaswegfläche (70) der Plattform (62; 162) aus erstreckt, wobei sich das Schaufelprofil (64) und der Fuß (66; 166) in entgegengesetzte Richtungen von der Plattform (62; 162) aus erstrecken; und
einen Plattformkühlkanal (88; 188), der sich innerhalb der Plattform (62; 162) erstreckt;
Leiten eines Kühlfluids in einen Einlass (90) des Plattformkühlkanals (88, 188), wobei der Einlass (90) stromaufwärts einer Vorderkante (78) des Schaufelprofils (64) angeordnet ist;
Zirkulierenlassen des Kühlfluids durch den Plattformkühlkanal (88; 188), um Wärme von der Plattform (62; 162) abzuführen; und Ausstoßen des Kühlfluids durch einen Auslass (92; 192) des Plattformkühlkanals (88; 288), wobei der Auslass durch eine Passfläche (76; 176; 77) der Plattform (62; 162) angeordnet ist,
**dadurch gekennzeichnet, dass**:
der Einlass (90) durch die Nicht-Gaswegfläche (70) der Plattform (62; 162) angeordnet ist.

11. Verfahren nach Anspruch 10, wobei der Schritt des Leitens das Einspeisen des Kühlfluids in den Plattformkühlkanal (88; 188) von einem vorderen Kranzhohlraum (96), der radial einwärts der Plattform (62; 162) angeordnet ist, beinhaltet.

12. Verfahren nach Anspruch 10 oder 11, umfassend das Anordnen einer Filmkühlschicht an der Passfläche (76; 176; 77), um eine Gasaufnahme in einen Passflächenspalt zwischen angrenzenden Rotorschaufeln (60; 160) zu hemmen.

13. Verfahren nach einem der Ansprüche 10 bis 12, wobei der Schritt des Zirkulierenlassens das Leiten des Kühlfluids durch einen gekrümmten Abschnitt (95) des Plattformkühlkanals (88; 188) vor dem Schritt des Ausstoßens beinhaltet.

## Revendications

1. Aube rotorique (60 ; 160) comprenant :
une plateforme (62 ; 162) qui s'étend entre un bord d'attaque (72) et un bord de fuite (74 ; 174) et s'étend circonférentiellement entre une première face d'accouplement (76 ; 176) et une seconde face d'accouplement (77) ;
un profil aérodynamique (64) qui s'étend à partir d'une surface de chemin de gaz (68) de ladite plateforme (62 ; 162) ;
une emplanture (66 ; 166) s'étendant à partir d'une surface de chemin sans gaz (70) de ladite plateforme (62 ; 162), moyennant quoi ledit profil aérodynamique (64) et ladite emplanture (66 ; 166) s'étendent dans des directions opposées à partir de ladite plateforme (62 ; 162) ; et
un passage de refroidissement de plateforme (88 ; 188) s'étendant à l'intérieur de ladite plateforme (62 ; 162) ; et ledit passage de refroidissement de plateforme (88 ; 188) comportant une entrée (90) disposée en amont d'un bord d'attaque (78) dudit profil aérodynamique (64) et une sortie (92 ; 192) disposée à travers une face d'accouplement (76 ; 176 ; 77) de ladite plateforme (62 ; 162),
**caractérisée en ce que** :
ladite entrée (90) est disposée à travers ladite surface de chemin sans gaz (70) de ladite plateforme (62 ; 162).

2. Aube rotorique selon la revendication 1, dans laquelle ledit passage de refroidissement de plateforme (88 ; 188) comporte une section incurvée (95) qui mène dans ladite sortie (92 ; 192).

3. Aube rotorique selon la revendication 1 ou 2, dans laquelle ladite entrée (90) est alimentée par un fluide de refroidissement à partir d'une cavité de rebord avant (96).

4. Aube rotorique selon la revendication 3, dans laquelle ladite cavité de rebord avant (96) est radialement vers l'intérieur de ladite plateforme (62 ; 162) et est en amont de ladite emplanture (66 ; 166).

5. Aube rotorique selon une quelconque revendication précédente, comprenant au moins un élément d'augmentation (94) formé à l'intérieur dudit passage de refroidissement de plateforme (88 ; 188) .

6. Aube rotorique selon une quelconque revendication précédente, dans laquelle ladite sortie (92 ; 192) est positionnée sur un bord de fuite (80) dudit profil aérodynamique (64) en amont dudit bord de fuite (80) dudit profil aérodynamique (64), ou en aval dudit bord de fuite (80) dudit profil aérodynamique (64).

7. Aube rotorique selon une quelconque revendication précédente, dans laquelle ledit passage de refroidissement de plateforme (88 ; 188) est positionné de manière adjacente à un intrados (82) dudit profil aérodynamique (64), ou est positionné de manière adjacente à un extrados (84) dudit profil aérodynamique (64) .

8. Aube rotorique selon une quelconque revendication précédente, dans laquelle ladite sortie (192) comporte une pluralité d'ouvertures de sortie (199) formées à travers ladite face d'accouplement (176).

9. Moteur à turbine à gaz (20), comprenant :
une aube rotorique (60 ; 160) selon une quelconque revendication précédente.

10. Procédé de refroidissement d'une plateforme (62 ; 162) d'une aube rotorique (60 ; 160), comprenant les étapes :
de fourniture d'une aube rotorique (60 ; 160) comprenant une plateforme (62 ; 162) qui s'étend entre un bord d'attaque (72) et un bord de fuite (74 ; 174) et s'étend circonférentiellement entre une première face d'accouplement (76 ; 176) et une seconde face d'accouplement (77) ;
un profil aérodynamique (64) qui s'étend à partir d'une surface de chemin de gaz (68) de ladite plateforme (62 ; 162) ;
une emplanture (66 ; 166) s'étendant à partir d'une surface de chemin sans gaz (70) de ladite plateforme (62 ; 162), moyennant quoi ledit profil aérodynamique (64) et ladite emplanture (66 ; 166) s'étendent dans des directions opposées à partir de ladite plateforme (62 ; 162) ; et
un passage de refroidissement de plateforme (88 ; 188) s'étendant à l'intérieur de ladite plateforme (62 ; 162) ;
la communication d'un fluide de refroidissement dans une entrée (90) dudit passage de refroidissement de plateforme (88, 188), l'entrée (90) étant disposée en amont d'un bord d'attaque (78) dudit profil aérodynamique (64) ;
la circulation dudit fluide de refroidissement à travers ledit passage de refroidissement de plateforme (88 ; 188) pour éliminer la chaleur de ladite plateforme (62 ; 162) ; et
l'expulsion dudit fluide de refroidissement à travers une sortie (92 ; 192) dudit passage de refroidissement de plateforme (88 ; 288), la sortie étant disposée à travers une face d'accouplement (76 ; 176 ; 77) de ladite plateforme (62 ; 162),
**caractérisé en ce que** :
ladite entrée (90) est disposée à travers ladite surface de chemin sans gaz (70) de ladite plateforme (62 ; 162).

11. Procédé selon la revendication 10, dans lequel ladite étape de communication comporte l'alimentation dudit fluide de refroidissement vers le passage de refroidissement de plateforme (88 ; 188) à partir d'une cavité de rebord avant (96) située radialement vers l'intérieur de ladite plateforme (62 ; 162).

12. Procédé selon la revendication 10 ou 11, comprenant le dépôt d'une couche de refroidissement par film au niveau de ladite face d'accouplement (76 ; 176 ; 77) pour empêcher l'ingestion de gaz dans un espace de face d'accouplement entre les aubes rotoriques adjacentes (60 ; 160).

13. Procédé selon l'une quelconque des revendications 10 à 12, dans lequel ladite étape de circulation comporte la communication dudit fluide de refroidissement à travers une section incurvée (95) dudit passage de refroidissement de plateforme (88 ; 188) avant ladite étape d'expulsion.
